# EUROPEAN PATENT APPLICATION

(11) **EP 4 618 512 A1**
(43) Date of publication of application: **17.09.2025**
(21) Application number: 23930681.4
(22) Date of filing: 31.03.2023
(51) Int. Cl.: H04L 67/02, H04L 67/142

(54) **INFORMATION PROCESSING DEVICE, INFORMATION PROCESSING METHOD, AND PROGRAM**

(71) Applicant: Rakuten Group, Inc., Setagaya-ku Tokyo 158-0094 (JP)
(72) Inventor: BESEDIN, Alexey, Tokyo 158-0094 (JP); NZAJYAYO, Josue, Tokyo 158-0094 (JP); MOHIL, Anshul, Tokyo 158-0094 (JP); HUI, Byron, Tokyo 158-0094 (JP); YAO, Xinnan, Tokyo 158-0094 (JP); NAKAMURA, Tadashi, Tokyo 158-0094 (JP)
(74) Representative: EIP
(86) International application number: PCT/JP2023/013649
(87) International publication number: WO 2024/202047

(57) **Abstract**

There is provided an information processing apparatus including a reception unit that receives, from a terminal, an HTTP request including cookies saved on the terminal, a transmission unit that transmits an HTTP response to the terminal, a selection unit that selects a deletion-object cookie from among the cookies saved on the terminal when the selection unit receives a request from the terminal, and a deletion processing unit that instructs the terminal to delete the deletion-object cookie selected by the selection unit.

## Description

### Technical Field

The present invention relates to an information processing apparatus, an information processing method, and a program.

### Background Art

There is known a technique for managing a state between a Web server and a Web browser by causing the Web browser to store a character string called a cookie. For example, Patent Literature 1 discloses an action history analysis system that more accurately judges a pattern of behavior by identifying, from cookie information and the like, a user that accesses the Internet and linking the user.

### Citation List

### Patent Literature

Patent Literature 1: Japanese Patent Laid-Open No. 2009-289172

### Summary of Invention

### Technical Problem

Along with increase of Web services and the like, various cookies are saved in a Web browser of a terminal. The cookies saved on the terminal are transmitted from the terminal to a Web server when the Web browser of the terminal accesses the Web server. However, when the data size of the cookies saved on the terminal is too large, the Web server receives an HTTP (Hypertext Transfer Protocol) request including the large amount of cookies and may return an error to the terminal. In this manner, when an error is returned from the Web server, the terminal is unable to receive a desired Web service.

Therefore, the present invention has as its object to provide an information processing apparatus, an information processing method, and a program capable of controlling the size of cookies saved on a terminal.

### Solution to Problem

An information processing apparatus according to one aspect of the present invention includes a reception unit that receives, from a terminal, an HTTP request including cookies saved on the terminal, a transmission unit that transmits an HTTP response to the terminal, a selection unit that selects a deletion-object cookie from among the cookies saved on the terminal when the selection unit receives a request from the terminal, and a deletion processing unit that instructs the terminal to delete the deletion-object cookie selected by the selection unit.

### Advantageous Effects of Invention

According to the present invention, it is possible to provide an information processing apparatus, an information processing method, and a program capable of controlling the size of cookies saved on a terminal.

### Brief Description of Drawings

[Figure 1] Figure 1 is a diagram showing one example of a Web system according to the present embodiment2
[Figure 2] Figure 2 is a diagram showing an example of a hardware configuration of a Web server.
[Figure 3] Figure 3 is a diagram showing an example of a functional block configuration of the Web server.
[Figure 4] Figure 4 is a chart showing one example of a cookie list.
[Figure 5] Figure 5 is a chart showing one example of a cookie management DB.
[Figure 6] Figure 6 is a chart showing one example of a procedure to be performed by the Web system.
[Figure 7] Figure 7 is a flowchart showing one example of a procedure for judging whether a terminal makes a cookie deletion request.
[Figure 8] Figure 8 is a flowchart showing one example of a procedure in which the Web server selects a deletion-object cookie.

### Description of Embodiment

An embodiment of the present invention will be described with reference to the accompanying drawings. Note that components denoted by identical reference numerals in the drawings have identical or similar configurations.

### <System Configuration>

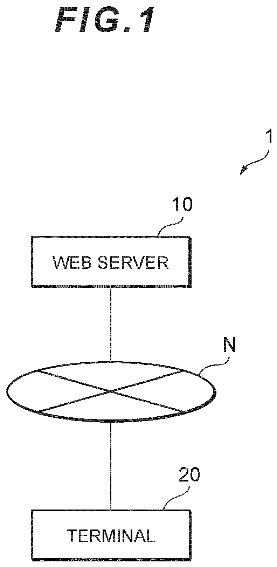

Figure 1 is a diagram showing one example of a Web system 1 according to the present embodiment. The Web system 1 includes a Web server 10 and a terminal 20. The terminal 20 can communicate with the Web server 10 via a communication network N.

The Web server 10 is a server that provides various types of Web sites. A Web site to be provided by the Web server 10 is not particularly limited, and examples of the Web site include an EC (Electronic Commerce) site, an online banking site, and a travel reservation site. Note that the Web server 10 may be implemented by a plurality of servers.

The terminal 20 is a terminal to be operated by a user, and covers various terminals including a Web browser, such as a smartphone, a tablet terminal, a cellular phone handset, a personal computer (PC), a notebook PC, a personal digital assistant (PDA), and a home console.

The Web server 10 issues a cookie to the terminal 20 that has gained access to a Web site as needed. The issued cookie is saved on the terminal 20. The terminal 20 transmits the saved cookie to the Web server 10 when the terminal 20 accesses the identical Web site again. The Web server 10 can know behavior of the terminal 20 in the Web site, and the like on the basis of the received cookie.

When the Web server 10 issues a cookie, the Web server 10 can specify a domain where the cookie is enabled. The cookie with the specified domain is enabled in the specified domain and a subdomain subordinate to the specified domain. When a domain is not specified at the time of issuance of a cookie, the cookie is enabled only in a domain where the cookie is issued. For example, when cookie A with a specified domain of xxx.com is saved on the terminal 20, the terminal 20 transmits cookie A to the Web server 10 both when the terminal 20 accesses a Web site of xxx.com and when the terminal 20 accesses a Web site of aaa.xxx.com. when cookie B issued in xxx.com without a specified domain is saved on the terminal 20, the terminal 20 transmits cookie B when the terminal 20 accesses the Web site of xxx.com and does not transmit cookie B when the terminal 20 accesses the Web site of aaa.xxx.com.

When a large number of Web sites are provided in the identical domain and subdomains subordinate to the domain in the Web server 10, and the Web sites independently issue various cookies, a large amount of cookies are saved on the terminal 20. When the terminal 20 accesses a Web site, cookies that are enabled in a domain of the Web site and subdomains subordinate to the domain are transmitted to the Web server 10 all at once.

Since cookies are included in a header of an HTTP request, when the amount of cookies to be transmitted is large, a header size increases. In the Web server 10, restrictions may be placed on an upper header size limit for an HTTP request. For this reason, when a large amount of cookies are transmitted from the terminal 20, the Web server 10 judges that a header size exceeds the upper limit and returns an error, and the terminal 20 cannot access a Web site. In the present embodiment, to prevent such a situation, the Web server 10 deletes a cookie (cookies) saved in a Web browser of the terminal 20 such that the sum of data sizes of cookies saved on the terminal is equal to or less than a threshold when the sum of the data sizes of the cookies is equal to or more than the threshold.

It is assumed that, when a large number of Web sites are provided in the identical domain or the subdomains subordinate to the domain, and the Web sites independently issue various cookies, management of what kinds of cookies the entire Web server 10 issues is difficult. Since the content of a Web site is frequently updated due to, e.g.**,** service change, a cookie not used anymore may be included in the cookies. Under such a situation, it is not easy for a manager of a Web site to keep accurate track of all issued cookies. Under the circumstances, the Web server 10 according to the present embodiment creates a database indicating what kinds of cookies are issued from the Web server 10 and the data size of each cookie by accumulating and analyzing cookies included in HTTP requests received from a plurality of terminals 20. This allows a manager of the Web server 10 to, for example, unify management of what kinds of cookies are issued from the Web server 10 by referring to the database. The manager can classify issued cookies into a group of deletable cookies and a group of cookies not to be deleted by, for example, confirming with a creator or the like of each Web site.

### <Hardware Configuration>

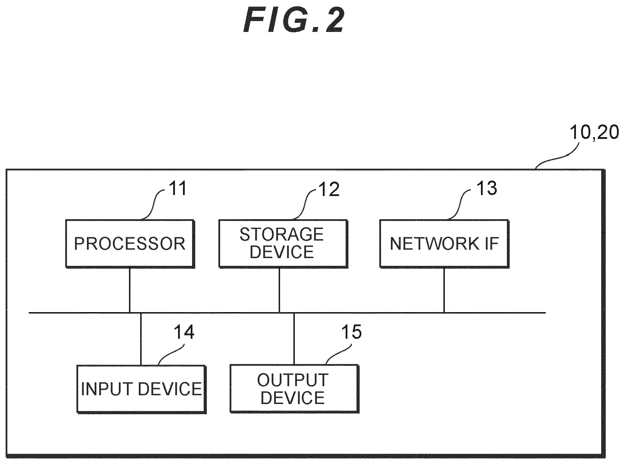

Figure 2 is a diagram showing an example of a hardware configuration of the Web server 10. The Web server 10 has a processor 11, such as a CPU (Central Processing Unit) or a GPU (Graphical Processing Unit), a storage device 12, such as a memory (e.g., a RAM or a ROM), an HDD (Hard Disk Drive), and/or an SSD (Solid State Drive), a network IF (network interface) 13 that performs wired or wireless communication, an input device 14 that accepts an input operation, and an output device 15 that outputs information. The input device 14 is, for example, a keyboard, a touch panel, a mouse, and/or a microphone. The output device 15 is, for example, a display, a touch panel, and/or a speaker.

The Web server 10 may be composed of one or a plurality of physical servers, may be constructed using a virtual server operating on a hypervisor, or may be constructed using a cloud server. The Web server 10 may be called an information processing apparatus.

### <Functional Block Configuration>

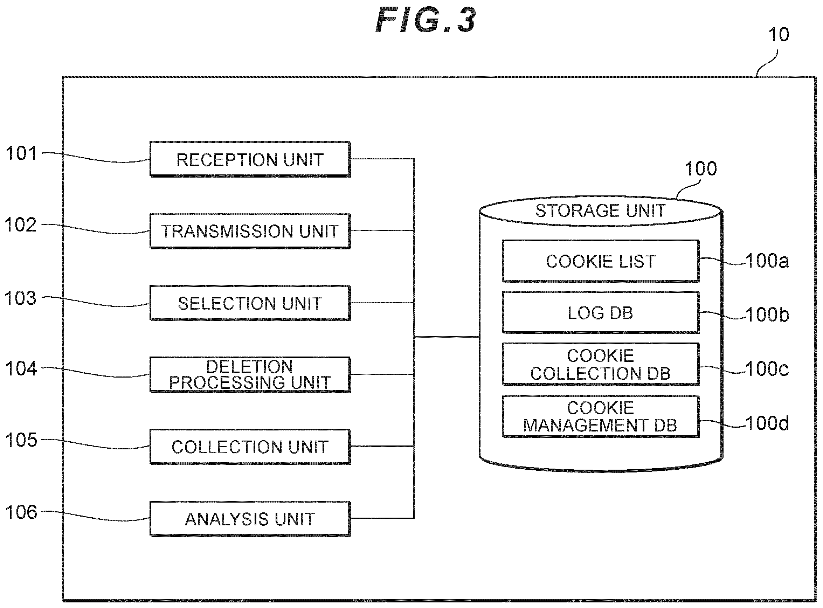

Figure 3 is a diagram showing an example of a functional block configuration of the Web server 10. The Web server 10 includes a storage unit 100, a reception unit 101, a transmission unit 102, a selection unit 103, a deletion processing unit 104, a collection unit 105, and an analysis unit 106. The storage unit 100 can be implemented using the storage device 12 that the Web server 10 includes. The reception unit 101, the transmission unit 102, the selection unit 103, the deletion processing unit 104, the collection unit 105, and the analysis unit 106 can be implemented through execution of a program stored in the storage device 12 by the processor 11 of the Web server 10. The program can be stored in a storage medium. The storage medium storing the program may be a computer readable non-transitory storage medium (non-transitory computer readable medium). The non-transitory storage medium is not particularly limited and may be a storage medium, such as a USB (Universal Serial Bus) memory or a CD-ROM (Compact Disc Read-Only Memory).

The storage unit 100 stores a cookie list 100a that manages a deletion-object cookie or a non-deletion-object cookie, a log DB (Data Base) 100b that stores a history (log) of deletion of a cookie from the terminal 20, a cookie collection DB 100c that collects cookies received from the terminal 20 by the Web server 10, and a cookie management DB 100d that stores a result of analyzing the cookies collected by the cookie collection DB 100c. The cookie list 100a may be generated, for example, on the basis of a result of checking the data size of cookies recorded in the cookie management DB 100d and purposes of the cookies by the manager of the Web server 10. Note that the storage unit 100 may be implemented by storage units of a plurality of servers. For example, the cookie list 100a, the log DB 100b, the cookie collection DB 100c, and the cookie management DB 100d may be stored in separate servers.

The reception unit 101 receives, from the terminal 20, an HTTP request including cookies saved on the terminal 20.

The transmission unit 102 transmits, to the terminal 20, an HTTP response to an HTTP request. The transmission unit 102 may transmit an HTTP response including a script. The script may be such a one that causes the terminal 20 to execute a process of determining whether the terminal 20 makes a cookie deletion request to the Web server 10. The script may be called a program. The script may be in JavaScript(R).

The transmission unit 102 may include, in the HTTP response, object information indicating an object terminal that is to make a cookie deletion request and/or a domain and transmit the object information. The script may be such a one that causes the terminal 20 to determine on the basis of the object information whether to make a cookie deletion request. In the object information, the percentage of terminals that make a cookie deletion request may be associated with each domain, and the script may be such a one that causes the terminal 20 to determine on the basis of the percentage whether to make a cookie deletion request when a domain specified in the HTTP request is included in the object information. The percentage may be, for example, a value (%) that is defined by the manager or the like.

When the selection unit 103 receives a cookie deletion request from the terminal 20 (a script transmitted to the terminal 20, to be more specific), the selection unit 103 selects a deletion-object cookie from among cookies saved on the terminal 20.

The deletion processing unit 104 instructs the terminal 20 to delete a deletion-object cookie selected by the selection unit 103.

The collection unit 105 collects cookies that are included in HTTP requests received from a plurality of terminals 20 and stores the cookies in the cookie collection DB 100c.

The analysis unit 106 divides cookies collected by the collection unit 105 into groups of identical cookies and analyzes the cookies on a group-by-group basis, and stores an analysis result in the cookie management DB 100d (a database). The analysis unit 106 analyzes, for the collected cookies, a minimum data size, an average data size, and a maximum data size of cookies with identical names and stores the minimum data size, the average data size, and the maximum data size in the cookie management DB 100d.

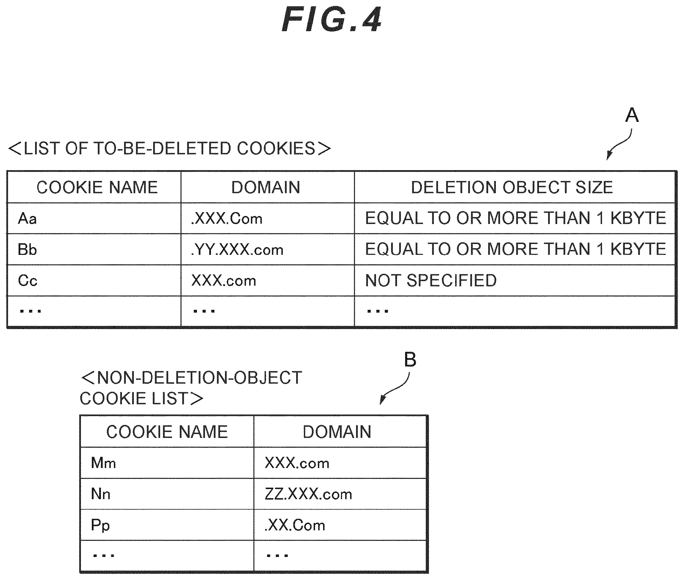

Figure 4 is a chart showing one example of the cookie list 100a. The cookie list 100a includes a list of to-be-deleted cookies indicating deletion-object cookies as shown in A of Figure 4 and a non-deletion-object cookie list (protected cookies) indicating non-deletion-object cookies as shown in B of Figure 4. A cookie name and a domain indicate a name of a cookie and a domain where the cookie is enabled. Note that, when a domain name starts with a dot (".") (cookies Aa and Bb in Figure 4), the domain name indicates that a domain is specified and that a cookie is enabled in both a domain with the identical name and subdomains subordinate to the domain. On the other hand, when the domain name starts with a character (a cookie Cc in Figure 4), the domain name indicates that no domain is specified and that a cookie is enabled only in a domain with the identical name.

A deletion object size refers to the size of a cookie as a deletion object. For example, the size of the cookie Aa is described as equal to or more than 1 kbyte in A of Figure 4. This means that, when the size of the cookie Aa saved on the terminal 20 is equal to or more than 1 kbyte, the cookie Aa becomes a deletion object. Note that some cookies have fixed data sizes and others have variable data sizes. Thus, specification of a deletion object size makes it possible to turn a cookie into a deletion object only when the data size thereof is equal to or more than a predetermined size. By not specifying a deletion object size, a cookie can be turned into a deletion object regardless of data size.

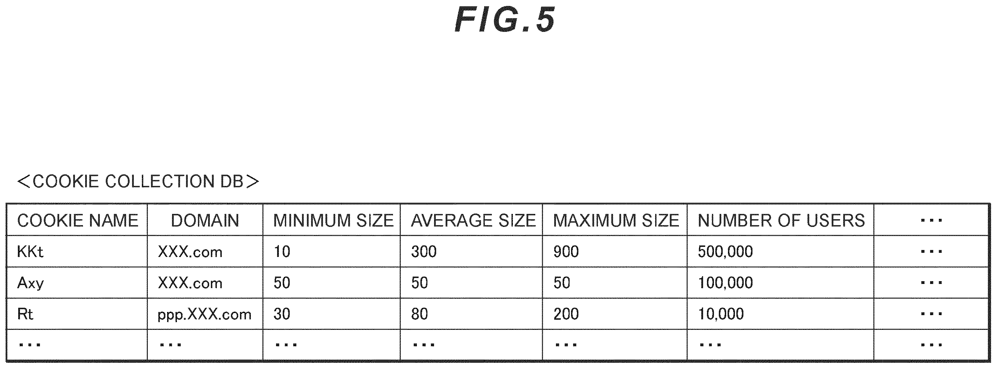

Figure 5 shows one example of the cookie management DB 100d. A cookie name and a domain are identical to those in Figure 4. A minimum size, an average size, and a maximum size indicate a minimum size, an average size, and a maximum size for each of cookies received in the past from the terminals 20 by the Web server 10. The number of users indicates the number of terminals 20, from which the Web server 10 has received the cookie during a past predetermined period (e.g.**,** the past year). For example, the example in Figure 5 means that the Web server 10 has received the cookie KKt from 500,000 terminals 20 in the past.

### <Procedure>

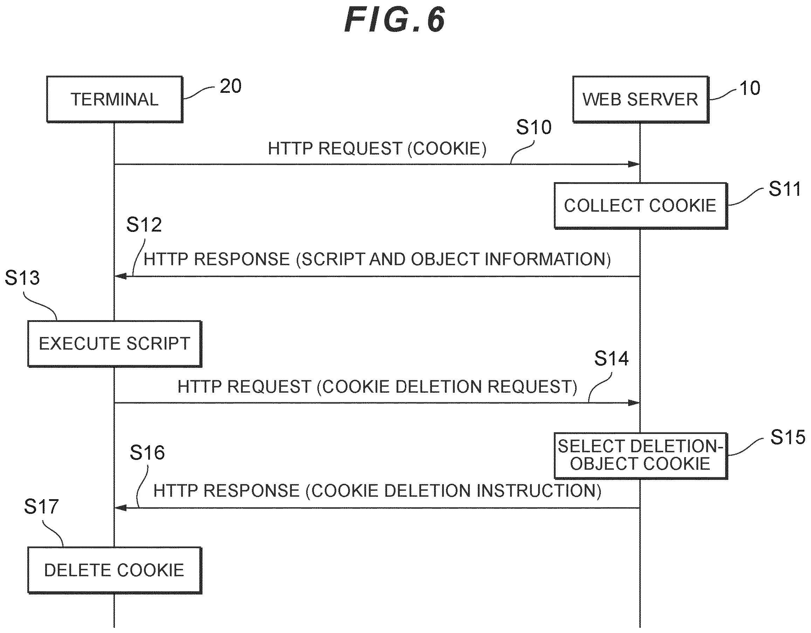

Figure 6 is a chart showing one example of a procedure to be performed by the Web system 1.

In step S10, when the Web browser of the terminal 20 receives, from the user, an instruction to access a Web site provided by the Web server 10, the Web browser transmits, to the Web server 10, an HTTP request including all cookies that are enabled in a domain of the Web site and subdomains subordinate to the domain. The reception unit of the Web server 10 receives the HTTP request from the terminal 20.

In step S11, the collection unit 105 of the Web server 10 stores the cookies received from the terminal 20 in the cookie collection DB 100c. Note that the analysis unit 106 may update the cookie management DB 100d by analyzing data accumulated in the cookie collection DB 100c at predetermined periods (e.g.**,** every month) .

In step S12, the transmission unit 102 of the Web server 10 transmits an HTTP response including a script and object information to the terminal 20.

In step S13, the Web browser of the terminal 20 executes the script included in the received HTTP response. The terminal 20 having executed the script judges on the basis of the object information whether to make a cookie deletion request. When the terminal 20 judges that the terminal 20 is to make a cookie deletion request, the terminal 20 advances to a procedure in step S14. When the terminal 20 judges that the terminal 20 is not to make a cookie deletion request, the terminal 20 ends the process without advancing to the procedure in step S14.

In step S14, the Web browser of the terminal 20 transmits an HTTP request including a cookie deletion request to the Web server 10. Note that all the cookies that are enabled in the domain of the Web site as an access destination and the subdomains subordinate to the domain are also included in the HTTP request. Note that a domain to be specified in the HTTP request may be embedded in advance in the script. The domain to be specified in the HTTP request may be a top-level domain of domains of Web sites provided by the Web server 10. With this specification, more cookies can be included in the HTTP request including the cookie deletion request. Transmitting an HTTP request including a cookie deletion request may mean calling an API (Application Programming Interface) for accepting a cookie deletion request that the Web server 10 includes.

In step S15, the selection unit 103 of the Web server 10 selects one or more deletion-object cookies by comparing the cookie list 100a with all the cookies received by the procedure in step S14.

In step S16, the deletion processing unit 104 of the Web server 10 transmits, to the terminal 20, an HTTP response including information giving an instruction to delete the cookies selected by the procedure in step S15. Note that the information giving the instruction to delete the cookies specifically corresponds to information giving an instruction to change expiration dates saved in the deletion-object cookies to times earlier than the current time. The deletion processing unit 104 of the Web server 10 records the cookies, the instruction for deletion of which is given, in the log DB 100b in association with an identifier of the terminal 20. The identifier of the terminal 20 is arbitrarily selected. For example, a cookie issued to uniquely identify the terminal 20 may be used.

In step S17, the Web browser of the terminal 20 deletes the cookies, the expiration dates of which are changed to the past times.

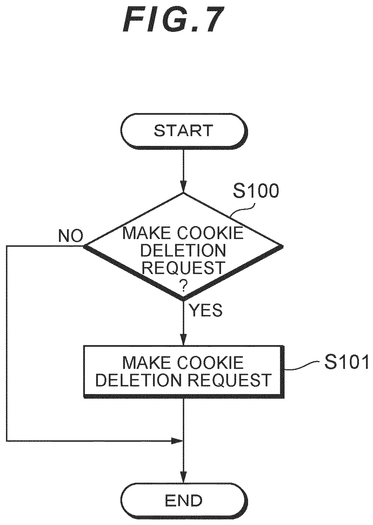

Figure 7 is a flowchart showing one example of a procedure for judging whether the terminal 20 makes a cookie deletion request. The procedure in Figure 7 corresponds to the procedure in step S13 of Figure 6.

In step S100, the terminal 20 having executed a script included in an HTTP response judges whether to make a cookie deletion request by judging whether the terminal 20 itself is included in object information included in the HTTP response. When the terminal 20 itself is included, the terminal 20 judges that the terminal 20 is to make a cookie deletion request and advances to a procedure in step S101. When the terminal 20 itself is not included, the terminal 20 judges that the terminal 20 is not to make a cookie deletion request and ends the process.

For example, the terminal 20 may judge whether the identifier of the terminal 20 itself is included in object information. Alternatively, the terminal 20 may judge that the identifier of the terminal 20 itself is included in the object information when a numerical value obtained as a result of performing a predetermined operation on the identifier for unique identification of the terminal 20 is included in the object information.

The terminal 20 having executed the script included in the HTTP response may judge whether to make a cookie deletion request by judging whether the domain of the Web server 10 that is a transmitter of the HTTP response is included in the object information. When the domain of the Web server 10 is included in the object information, the terminal 20 judges that the terminal 20 is to make a cookie deletion request and advances to the procedure in step S101. When the domain is not included in the object information, the terminal 20 judges that the terminal 20 is not to make a cookie deletion request and ends the process. Note that, in the object information, the percentage of the terminals 20 that make a cookie deletion request may be associated with each domain. For example, assume that 10% is associated as a percentage with a domain (XXX.com) in the object information. In this case, the terminal 20 may judge, with a probability of 10%, that the terminal 20 is to make a cookie deletion request when the domain of the Web server 10 that is the transmitter of the HTTP response is XXX.com.

In step S101, the terminal 20 transmits an HTTP request including a cookie deletion request to the Web server 10.

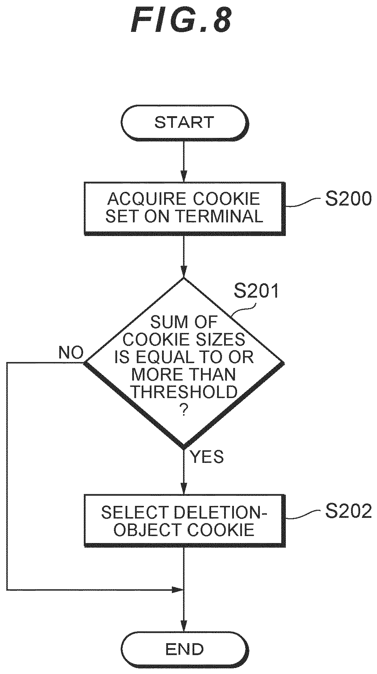

Figure 8 is a flowchart showing one example of a procedure in which the Web server 10 selects a deletion-object cookie. The procedure in Figure 8 corresponds to the procedure in step S15 of Figure 6.

In step S200, the selection unit 103 of the Web server 10 acquires cookies saved on the terminal 20. For example, the selection unit 103 of the Web server 10 acquires all cookies included in a header of an HTTP request (step S14 in Figure 6) including a cookie deletion request.

In step S201, the selection unit 103 of the Web server 10 judges whether the sum of data sizes of the cookies acquired in the procedure in step S200 is equal to or more than a threshold. When the sum is the threshold, the selection unit 103 advances to a procedure in step S202. When the sum is less than the threshold, the selection unit 103 judges that cookie deletion is unnecessary and ends the process. Note that the threshold may be called a first threshold.

In step S202, the selection unit 103 of the Web server 10 selects a deletion-object cookie.

### (Deletion-Object Cookie Selection Method)

A plurality of specific examples of a method by which the selection unit 103 selects a deletion-object cookie will be subsequently described. Note that deletion methods to be described below can be arbitrarily combined.

### [First Deletion Method]

When a cookie included in the list of to-be-deleted cookies (a deletion object list) is present among cookies saved on the terminal 20, the selection unit 103 may select the cookie as a deletion-object cookie. For example, when cookies shown in A of Figure 4 are included in the list of to-be-deleted cookies, the selection unit 103 may select a cookie whose cookie name is Aa, Bb, or Cc as a deletion object. Note that, in the first deletion method, a cookie without a specified deletion object size may be selected as a deletion-object cookie from the list of to-be-deleted cookies. In this case, the selection unit 103 may select a cookie whose cookie name is Cc as a deletion object.

### [Second Deletion Method]

When the size of a cookie that is included on the list of to-be-deleted cookies (deletion object list) and is saved on the terminal 20 is equal to or more than a deletion object size in the list of to-be-deleted cookies among cookies saved on the terminal 20, the selection unit 103 may select the cookie as a deletion-object cookie. For example, when the size of the cookie Aa saved on the terminal 20 is 0.5 kbytes, the selection unit 103 does not select the cookie Aa as a deletion object. On the other hand, when the size of the cookie Aa saved on the terminal 20 is 1.5 kbytes, the selection unit 103 selects the cookie Aa as a deletion object.

### [Third Deletion Method]

The selection unit 103 may select a cookie that is not included on the non-deletion-object list as a deletion-object cookie from among cookies saved on the terminal 20. For example, when cookies shown in B of Figure 4 are included on the non-deletion-object cookie list, the selection unit 103 may select a deletion-object cookie from among cookies other than cookies named Mm, Nn, and Pp.

### [Fourth Deletion Method]

The selection unit 103 may select a deletion-object cookie in descending order of data size from among cookies saved on the terminal 20 until the size of cookies saved on the terminal 20 is equal to or less than a predetermined threshold after cookie deletion. Note that, in the fourth deletion method, the selection unit 103 may select a deletion-object cookie from among cookies that are not included on the non-deletion-object list.

When the selection unit 103 selects a deletion-object cookie by the first deletion method and/or the second deletion method described above and deletes the selected cookie, and the size of cookies saved on the terminal 20 exceeds the predetermined threshold, the selection unit 103 may further execute the fourth deletion method.

For example, assume that a cookie A1, a cookie A2, and a cookie A3 are present on the terminal 20 and that their data sizes are 100 bytes, 200 bytes, and 500 bytes. Also, assume that the size of cookies saved on the terminal 20 (the size of cookies that are enabled in a domain of a Web site and subdomains subordinate to the domain, notification of which is given by an HTTP request, among all cookies saved on the terminal 20, to be more exact) is 5.5 kbytes. Additionally, assume that the predetermined threshold is 5 kbytes. In this case, the selection unit 103 selects the cookie A3 as a deletion object and does not select the cookies A1 and A2 as deletion objects. Alternatively, assume that the size of cookies saved on the terminal 20 is 5.7 kbytes. In this case, the selection unit 103 selects the cookies A3 and A2 as deletion objects and does not select the cookie A1 as a deletion object. The predetermined threshold may be called a second threshold.

The selection unit 103 may select deletion-object cookies in the order of the first deletion method, the second deletion method, the fourth deletion method. For example, the selection unit 103 selects a cookie without a specified deletion object size from the list of to-be-deleted cookies by the first deletion method described above. Subsequently, the selection unit 103 further selects a deletion-object cookie from among cookies with specified deletion object sizes in the list of to-be-deleted cookies by the second deletion method when the size of cookies saved on the terminal 20 exceeds the predetermined threshold after the cookie selected by the first deletion method is deleted. Subsequently, the selection unit 103 further executes the fourth deletion method when the size of cookies saved on the terminal 20 exceeds the predetermined threshold after the cookie selected by the second deletion method is deleted.

### <Conclusion>

According to the above-described embodiment, the Web server 10 can delete a cookie held by the terminal 20**.** This allows provision of an information processing apparatus, an information processing method, and a program capable of controlling the size of cookies saved on the terminal 20**.**

The above-described embodiment is intended to facilitate understanding of the present invention and is not intended to limitedly interpret the present invention. The flowcharts and sequences described in the embodiment, the elements that the embodiment includes, and arrangement, materials, conditions, shapes, sizes, and the like thereof are not limited to the illustrated ones and can be appropriately changed. Configurations described in different embodiments can be partially replaced or combined.

### <Supplements>

### (Supplement 1)

An information processing apparatus including
a reception unit that receives, from a terminal, an HTTP request including cookies saved on the terminal,
a transmission unit that transmits an HTTP response to the terminal,
a selection unit that selects a deletion-object cookie from among the cookies saved on the terminal when the selection unit receives a request from the terminal, and
a deletion processing unit that instructs the terminal to delete the deletion-object cookie selected by the selection unit.

### (Supplement 2)

The information processing apparatus according to Supplement 1, wherein
the transmission unit transmits the HTTP response including a program, and
the selection unit selects the deletion-object cookie when the selection unit receives the request from the program transmitted to the terminal.

### (Supplement 3)

The information processing apparatus according to Supplement 2, wherein
the program causes the terminal to execute a process of determining whether the terminal makes the request.

### (Supplement 4)

The information processing apparatus according to Supplement 3, wherein
the transmission unit includes, in the HTTP response, object information indicating an object terminal that is to make the request and/or a domain and transmits the object information, and
the program causes the terminal to determine on the basis of the object information whether to make the request.

### (Supplement 5)

The information processing apparatus according to Supplement 4, wherein
a percentage is associated with each of domains in the object information, and
the program causes the terminal to determine on the basis of the percentage whether to make the request when a domain in the HTTP request is included in the object information.

### (Supplement 6)

The information processing apparatus according to any one of Supplements 1 to 5, wherein
the selection unit selects the deletion-object cookie from among the cookies saved on the terminal when a sum of data sizes of the cookies saved on the terminal is equal to or more than a threshold.

### (Supplement 7)

The information processing apparatus according to any one of Supplements 1 to 6, wherein
the selection unit selects a cookie included on a deletion object list as the deletion-object cookie when the cookie is present among the cookies saved on the terminal.

### (Supplement 8)

The information processing apparatus according to any one of Supplements 1 to 7, wherein
the selection unit selects, as the deletion-object cookie, a cookie that is not included on a non-deletion-object list of the cookies saved on the terminal.

### (Supplement 9)

The information processing apparatus according to any one of Supplements 1 to 8, wherein
the selection unit selects the deletion-object cookie in descending order of data size from among the cookies saved on the terminal until a size of the cookies saved on the terminal is equal to or less than a predetermined threshold after cookie deletion.

### (Supplement 10)

The information processing apparatus according to any one of Supplements 1 to 9, including
a collection unit that collects cookies included in HTTP requests received from a plurality of terminals, and
an analysis unit that divides the cookies collected by the collection unit into groups of identical cookies and analyzes the cookies on a group-by-group basis, and stores an analysis result in a database.

### (Supplement 11)

The information processing apparatus according to Supplement 10, wherein
the analysis unit analyzes, for the collected cookies, a minimum data size, an average data size, and a maximum data size of cookies with identical names and stores the minimum data size, the average data size, and the maximum data size in the database.

### (Supplement 12)

An information processing method to be executed by an information processing apparatus, including
a step of receiving, from a terminal, an HTTP request including cookies saved on the terminal,
a step of transmitting an HTTP response to the terminal,
a step of selecting a deletion-object cookie from among the cookies saved on the terminal when a request is received from the terminal, and
a step of instructing the terminal to delete the selected deletion-object cookie.

### (Supplement 13)

A program for causing a computer to execute:
a step of receiving, from a terminal, an HTTP request including cookies saved on the terminal,
a step of transmitting an HTTP response to the terminal,
a step of selecting a deletion-object cookie from among the cookies saved on the terminal when a request is received from the terminal, and
a step of instructing the terminal to delete the selected deletion-object cookie.

### Reference Signs List

1 Web system
10 Web server
11 processor
12 storage device
13 network IF
14 input device
15 output device
20 terminal
100 storage unit
100a cookie list
100b log DB
100c cookie collection DB
100d cookie management DB
101 reception unit
102 transmission unit
103 selection unit
104 deletion processing unit
105 collection unit
106 analysis unit

## Claims

1. An information processing apparatus comprising:
a reception unit that receives, from a terminal, an HTTP request including cookies saved on the terminal;
a transmission unit that transmits an HTTP response to the terminal;
a selection unit that selects a deletion-object cookie from among the cookies saved on the terminal when the selection unit receives a request from the terminal; and
a deletion processing unit that instructs the terminal to delete the deletion-object cookie selected by the selection unit.

2. The information processing apparatus according to claim 1, wherein
the transmission unit transmits the HTTP response including a program, and
the selection unit selects the deletion-object cookie when the selection unit receives the request from the program transmitted to the terminal.

3. The information processing apparatus according to claim 2, wherein
the program causes the terminal to execute a process of determining whether the terminal makes the request.

4. The information processing apparatus according to claim 3, wherein
the transmission unit includes, in the HTTP response, object information indicating an object terminal that is to make the request and/or a domain and transmits the object information, and
the program causes the terminal to determine on the basis of the object information whether to make the request.

5. The information processing apparatus according to claim 4, wherein
a percentage is associated with each of domains in the object information, and
the program causes the terminal to determine on the basis of the percentage whether to make the request when a domain in the HTTP request is included in the object information.

6. The information processing apparatus according to claim 1, wherein
the selection unit selects the deletion-object cookie from among the cookies saved on the terminal when a sum of data sizes of the cookies saved on the terminal is equal to or more than a threshold.

7. The information processing apparatus according to claim 1, wherein
the selection unit selects a cookie included on a deletion object list as the deletion-object cookie when the cookie is present among the cookies saved on the terminal.

8. The information processing apparatus according to claim 1, wherein
the selection unit selects, as the deletion-object cookie, a cookie that is not included on a non-deletion-object list of the cookies saved on the terminal.

9. The information processing apparatus according to claim 1, wherein
the selection unit selects the deletion-object cookie in descending order of data size from among the cookies saved on the terminal until a size of the cookies saved on the terminal is equal to or less than a predetermined threshold after cookie deletion.

10. The information processing apparatus according to claim 1, comprising:
a collection unit that collects cookies included in HTTP requests received from a plurality of terminals; and
an analysis unit that divides the cookies collected by the collection unit into groups of identical cookies and analyzes the cookies on a group-by-group basis, and stores an analysis result in a database.

11. The information processing apparatus according to claim 10, wherein
the analysis unit analyzes, for the collected cookies, a minimum data size, an average data size, and a maximum data size of cookies with identical names and stores the minimum data size, the average data size, and the maximum data size in the database.

12. An information processing method to be executed by an information processing apparatus, comprising:
a step of receiving, from a terminal, an HTTP request including cookies saved on the terminal;
a step of transmitting an HTTP response to the terminal;
a step of selecting a deletion-object cookie from among the cookies saved on the terminal when a request is received from the terminal; and
a step of instructing the terminal to delete the selected deletion-object cookie.

13. A program for causing a computer to execute:
a step of receiving, from a terminal, an HTTP request including cookies saved on the terminal;
a step of transmitting an HTTP response to the terminal;
a step of selecting a deletion-object cookie from among the cookies saved on the terminal when a request is received from the terminal; and
a step of instructing the terminal to delete the selected deletion-object cookie.
